# FASCICULE DE BREVET EUROPEEN

(11) **EP 1 591 343 B1**
(45) Date de publication et mention de la délivrance du brevet: **24.10.2007**
(21) Numéro de dépôt: 05356038.9
(22) Date de dépôt: 25.02.2005
(51) Int. Cl.: B62D 3/12

(54) **Dispositif pour limiter le déplacement axial d'un poussoir de direction à crémaillère de véhicule automobile**
Axialer Wegbegrenzer für das Druckstück einer Kraftfahrzeug-Zahnstangenlenkung
Axial travel limiter for the pressure yoke of an automotive rack-and-pinion steering gear

(30) Priorité: 27.04.2004 FR 0404454
(43) Date de publication de la demande: 02.11.2005
(73) Titulaire: Koyo Steering Europe (K.S.E.), 69540 Irigny (FR)
(72) Inventeur: Durand, Philippe, 69100 Villeurbanne (FR)
(74) Mandataire: Bratel, Gérard

(56) Documents cités:
- WO-A-01/96167
- WO-A-03/097427
- DE-B- 1 175 089
- US-A- 5 931 046

## Description

La présente invention concerne, de façon générale, les directions à crémaillère des véhicules automobiles. Plus particulièrement, cette invention s'intéresse à l'élément dit "poussoir" d'une telle direction et elle se rapporte, plus spécialement encore, à un dispositif pour limiter le déplacement axial du poussoir.

Dans un système de direction à crémaillère, un pignon de direction est lié en rotation avec la colonne de direction, manoeuvrée à l'aide du volant de conduite du véhicule, le pignon venant en prise avec une crémaillère montée coulissante dans un carter de direction. Les deux extrémités de la crémaillère, extérieures au carter, sont accouplées à des biellettes de direction associées respectivement aux roues directrices droite et gauche du véhicule. Ainsi, la rotation du volant dans un sens ou dans l'autre, donc la rotation correspondante du pignon de direction, est convertie en une translation correspondante de la crémaillère qui, par l'intermédiaire des biellettes, provoque elle-même l'orientation des roues directrices du véhicule, pour un braquage à droite ou à gauche.

De manière assez habituelle, dans ce type de direction, la crémaillère est maintenue en contact d'engrènement permanent contre le pignon à l'aide d'un organe mécanique désigné comme "poussoir", qui est monté coulissant dans un "fût" de carter, c'est-à-dire une partie cylindrique correspondante du carter de direction, ou un carter auxiliaire, suivant un axe sensiblement perpendiculaire, ou non, à l'axe longitudinal de coulissement de la crémaillère, et qui est sollicité élastiquement de manière à s'appuyer sur le dos de la crémaillère, par une partie terminale de forme adaptée, à l'opposé du pignon. Grâce à un tel poussoir, les défauts d'engrènement de la crémaillère avec le pignon sont compensés, et ledit poussoir assure également le guidage de la crémaillère. Des exemples de lignes poussoir connues sont donnés dans les demandes de brevets européens n° 0 758 605 et n° 0 860 345, ou dans la demande de brevet français n° 2 663 284.

Lors du fonctionnement de la direction, les efforts provenant des biellettes, du pignon ou de la flexion de la crémaillère provoquent un déplacement axial du poussoir dans son logement, de sorte que la compensation des défauts d'engrènement de la crémaillère avec le pignon n'est plus assurée de façon optimale, ce phénomène s'aggravant en outre du fait de l'usure progressive entre le poussoir et la crémaillère.

Certains dispositifs connus, décrits par exemple dans le brevet des Etats Unis d'Amérique n° 5 931 046 ou dans la demande de brevet internationale n° 03 097427, permettent de limiter le déplacement axial du poussoir en ce qu'ils comportent un manchon élastiquement déformable entourant périphériquement, au moins sur une fraction de sa longueur, le poussoir. Toutefois, ces dispositifs connus ne compensent pas automatiquement les effets de l'usure entre le poussoir et la crémaillère et nécessitent à cet effet que la position axiale du poussoir dans le fût de carter soit régulièrement ajustée.

La présente invention vise à assurer un fonctionnement correct du poussoir vis-à-vis de la crémaillère, en limitant le déplacement axial du poussoir, et en compensant automatiquement les effets de l'usure entre le poussoir et la crémaillère.

A cet effet, l'invention a pour objet un dispositif pour limiter le déplacement axial d'un poussoir de direction à crémaillère de véhicule automobile, du type sus-mentionné, dans lequel le manchon comporte une partie terminale présentant en son milieu une forme en tronc de cône rentrant, à la manière d'une rondelle, et prévue pour être fixée à un pion émergeant du poussoir du côté opposé à la crémaillère, de sorte qu'une poussée axialement exercée sur la partie terminale du manchon, par l'intermédiaire d'une rondelle d'appui élastique également en forme de tronc de cône rentrant mais orienté en sens inverse à celui de la partie terminale du manchon, de façon à ce que la rondelle d'appui et la partie terminale du manchon viennent en appui l'une contre l'autre par leurs extrémités de plus grand diamètre, déforme élastiquement ladite partie terminale et accentue la friction du manchon sur la paroi intérieure du fût de carter.

Ainsi, l'invention consiste à faire coopérer deux éléments élastiques, une partie terminale du manchon et une rondelle d'appui, pour empêcher le "recul" axial du poussoir tout en ajustant automatiquement sa position axiale dès l'apparition d'usure entre le poussoir et la crémaillère. Sous l'effet d'une poussée axiale, la partie terminale du manchon se déforme et il se produit un phénomène d'expansion élastique, au niveau de la circonférence de la partie terminale du manchon, qui a pour effet de coincer le manchon contre la paroi du logement du poussoir, et par conséquent de limiter et maîtriser le recul axial du poussoir. Lorsque la contrainte sur le manchon diminue, sa partie terminale restitue l'énergie emmagasinée. La rondelle d'appui ajuste élastiquement la position axiale du manchon, et donc du poussoir, pour compenser les effets de l'usure entre le poussoir et la crémaillère.

Cette rondelle d'appui est par exemple solidaire d'un organe de réglage, en particulier d'une vis guidée par son filetage dans le fût de carter, pour régler la poussée axiale exercée sur le manchon.

L'organe de réglage est de préférence pourvu d'un orifice central, permettant ainsi, lors du montage de l'ensemble, de glisser un doigt au travers pour appliquer le poussoir contre la crémaillère selon l'effort de coulissement désiré pour la crémaillère. Par ailleurs, l'orifice central de l'organe de réglage peut recevoir un obturateur, dont une extrémité, émergeant de l'orifice central de l'organe de réglage, en regard du pion du poussoir, est de préférence apte à amortir un recul axial du poussoir.

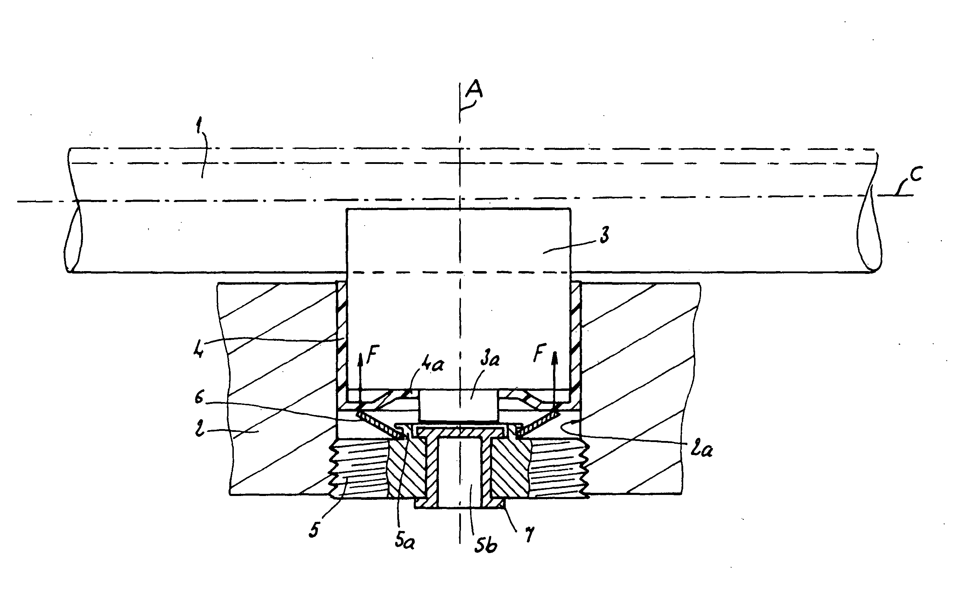

De toute façon, l'invention sera mieux comprise à l'aide de la description qui suit, en référence au dessin schématique annexé représentant, à titre d'exemple, une forme d'exécution de ce dispositif pour limiter le déplacement axial d'un poussoir de direction à crémaillère.

L'unique figure de ce dessin est une vue en coupe dans un plan parallèle à l'axe de la crémaillère, d'une ligne poussoir avec indication sommaire de la crémaillère 1.

La ligne poussoir est logée dans un fût du carter de direction 2, c'est-à-dire une partie tubulaire 2a, ouverte vers l'extérieur, dont l'axe central s'étend orthogonalement à l'axe de rotation du pignon (non représenté) et à l'axe longitudinal de coulissement de la crémaillère 1. La ligne poussoir est constituée des éléments suivants.

Un poussoir 3 proprement dit, avec extrémité de forme adaptée au contact avec la crémaillère 1, est guidé en coulissement dans le fût 2a du carter de direction 2. Le poussoir 3 comporte, du côté opposé à la crémaillère 1, un pion 3a autour duquel est fixée une partie terminale 4a d'un manchon 4 en une matière élastiquement déformable.

La manchon 4 entoure périphériquement le poussoir 3 sur une fraction de sa longueur, du côté opposé à la crémaillère 1. La partie terminale 4a du manchon 4 a en son milieu une forme en tronc de cône rentrant, à la manière d'une rondelle élastique, de manière à réaliser un "débattement" avec le corps du poussoir 3.

Une vis de réglage 5, retenue et guidée par son filetage dans le fût de carter 2a, exerce une poussée axiale F sur le poussoir 3 par l'intermédiaire d'une rondelle d'appui 6 élastique, ici métallique, et de la partie terminale 4a du manchon 4.

La rondelle d'appui élastique 6 présente également une forme en tronc de cône rentrant mais orienté en sens inverse à celui de la partie terminale 4a du manchon 4, de façon à ce que la rondelle d'appui 6 et la partie terminale 4a viennent en appui l'une contre l'autre par leurs extrémités de plus grand diamètre.

La vis de réglage 5 permet également de régler la poussée axiale F sur le poussoir 3. La rondelle d'appui 6 est fixée sur la vis de réglage 5, par exemple par clipsage sur un téton central 5a de la vis de réglage 5.

La vis de réglage 5 comporte également un orifice central 5b, traversant le téton central 5a, et qui permet, lors du montage, de passer un doigt au travers pour caler le poussoir 3 en contrainte contre la crémaillère 1. Tout en maintenant cette pré-charge sur le poussoir 3, la vis de réglage 5 est vissée, en fonction de l'effort de coulissement désiré pour la crémaillère 1, de façon à écraser la rondelle d'appui 6 élastique contre la partie terminale 4a du manchon 4. Ensuite, un obturateur 7 est mis en place dans l'orifice central 5b de la vis de réglage 5.

Ainsi, lors du fonctionnement de la direction, les efforts provenant des biellettes, du pignon ou de la flexion de la crémaillère 1, provoquent un déplacement axial du poussoir 3 dans le fût de carter 2a, en particulier un recul dans la direction opposée à la crémaillère 1. Ce recul du poussoir 3 accentue la poussée F de la rondelle d'appui 6 sur la base annulaire de la partie terminale 4a du manchon 4.

Cette partie terminale 4a étant conçue comme une rondelle élastique, elle vient d'une part se bloquer sur le pion 3a dépassant du poussoir 3, et d'autre part, accroître son effort de friction, à la circonférence de sa base annulaire, sur la paroi du fût de carter 2a.

Ce phénomène a pour effet de coincer le manchon 4 dans le fût du carter 2a et de limiter ainsi le recul du poussoir 3. Lorsque la contrainte diminue, la base de la partie terminale 4a du manchon 4 restitue l'énergie emmagasinée.

Lorsqu'apparaît une usure entre le poussoir 3 et la crémaillère 1, la rondelle d'appui 6 élastique repousse et fait "avancer" le manchon 4 en direction de la crémaillère 1, axialement dans le fût du carter 2a, de sorte que la position axiale du poussoir 3 est ajustée automatiquement dès l'apparition d'usure entre le poussoir 3 et la crémaillère 1.

Ainsi, la partie terminale 4a du manchon 4 et la rondelle d'appui 6 constituent deux éléments élastiques qui coopèrent pour empêcher le recul axial du poussoir 3 tout en ajustant automatiquement sa position axiale dès l'apparition d'usure.

Comme il va de soi, on ne s'éloignerait notamment pas du cadre de l'invention, tel que défini dans les revendications annexées :
- en appliquant le dispositif à des poussoirs de toutes configurations, logés soit dans une partie du carter principal de la direction, soit dans un carter auxiliaire fixé rigidement au carter principal ;
- en complétant ce dispositif par un joint annulaire d'étanchéité assurant également un filtrage du jeu radial du poussoir ;
- en modifiant la structure de la ligne poussoir, pour ce qui est des éléments autres que le poussoir proprement dit, par exemple en remplaçant la vis de réglage par un moyen de réglage quelconque ;
- en destinant ce dispositif à toutes directions à crémaillère, qu'il s'agisse de directions manuelles ou de directions assistées.

## Revendications

1. Dispositif pour limiter le déplacement axial d'un poussoir de direction à crémaillère de véhicule automobile, le poussoir (3) étant monté coulissant, suivant un axe (A) sensiblement perpendiculaire à l'axe longitudinal de coulissement (C) de la crémaillère (1), dans un fût (2a) de carter de direction (2), et ce poussoir (3) étant appuyé élastiquement sur le dos de la crémaillère (1), un manchon (4) élastiquement déformable entourant périphériquement le poussoir (3) au moins sur une fraction de sa longueur, **caractérisé en ce que** le manchon (4) comporte une partie terminale (4a) présentant en son milieu une forme en tronc de cône rentrant, et prévue pour être fixée à un pion (3a) émergeant du poussoir (3) du côté opposé à la crémaillère (1), de sorte qu'une poussée (F) axialement exercée sur la partie terminale (4a) du manchon (4), par l'intermédiaire d'une rondelle d'appui (6) élastique en forme de tronc de cône rentrant orienté en sens inverse à celui de la partie terminale (4a) du manchon (4) de façon à ce que la rondelle d'appui (6) et la partie terminale (4a) viennent en appui l'une contre l'autre par leurs extrémités de plus grand diamètre, déforme élastiquement ladite partie terminale (4a) et accentue la friction du manchon (4) sur la paroi intérieure du fût de carter (2a).

2. Dispositif selon la revendication 1, **caractérisé en ce que** la rondelle d'appui (6) est solidaire d'un organe de réglage (5), en particulier une vis de réglage (5) guidée par son filetage dans le fût de carter (2a).

3. Dispositif selon la revendication 2, **caractérisé en ce que** l'organe de réglage (5) est pourvu d'un orifice central (5b) qui reçoit un obturateur (7), dont une extrémité, émergeant de l'orifice central (5b) de l'organe de réglage (5), en regard du pion (3a) du poussoir (3), est de préférence apte à amortir un recul axial du poussoir (3) .

## Claims

1. Device for limiting the axial displacement of a yoke of a rack-type steering system of a motor vehicle, the yoke (3) being mounted to slide along an axis (A) substantially perpendicular to the longitudinal sliding axis (C) of the rack (1), in a casing barrel (2a) of the steering system (2), and this yoke (3) being elastically pressed against the back of the rack (1), an elastically deformable sleeve (4) surrounding the periphery of the yoke (3) at least over a portion of its length, **characterised in that** the sleeve (4) comprises a terminal part (4a) having in its centre a truncated cone shape and being provided to be fixed to a slug (3a) emerging from the yoke (3) on the side opposite the rack (1), so that a thrust (F) exerted axially on the terminal part (4a) of the sleeve (4), via an elastic washer (6) in the shape of a truncated cone oriented in the opposite direction to that of the terminal part (4a) of the sleeve (4) so that the washer (6) and the terminal part (4a) bear against one another by their larger-diameter ends, elastically deforms said terminal part (4a) and accentuates the friction of the sleeve (4) on the inner wall of the casing barrel (2a).

2. Device according to claim 1, **characterised in that** the washer (6) is integral with an adjusting member (5), in particular an adjusting screw (5) guided by its thread in the casing barrel (2a).

3. Device according to claim 2, **characterised in that** the adjusting member (5) is provided with a central orifice (5b) which receives a stopper (7), of which one end that emerges from the central orifice (5b) of the adjusting member (5), opposite the slug (3a) of the yoke (3), is preferably able to dampen an axial return of the yoke (3).

## Patentansprüche

1. Vorrichtung zum Begrenzen der axialen Verlagerung eines Druckstücks einer Zahnstangenlenkung für ein Kraftfahrzeug, wobei das Druckstück (3) entlang einer zu der Längsachse (C) der Gleitverschiebung der Zahnstange (1) im wesentlichen senkrecht stehenden Achse (A) gleitend verschiebbar in einem Zylinder (2a) des Lenkgehäuses (2) montiert ist, wobei dieses Druckstück (3) an der Rückseite der Zahnstange (1) elastisch abgestützt ist, wobei eine elastisch verformbare Hülse (4) das Druckstück (3) zumindest über einen Teil seiner Länge umfangsmäßig umgibt,
**dadurch gekennzeichnet,**
**daß** die Hülse (4) ein Endteil (4a) aufweist, das in seiner Mitte eine zurückspringende Kegelstumpfform aufweist und dazu vorgesehen ist, an einem Zapfen (3a) befestigt zu werden, welcher auf der der Zahnstange (1) entgegengesetzten Seite aus der Druckstück (3) vorsteht, so daß eine Druckkraft (F), die mittels einer zurückspringenden kegelstumpfförmigen elastischen Auflagescheibe (6), deren Orientierungsrichtung zu derjenigen des Endteils (4a) der Hülse (4) entgegengesetzt ist, derart in Axialrichtung auf das Endteil (4a) der Hülse (4) ausgeübt wird, daß die Auflagescheibe (6) und das Endteil (4a) an ihren Enden mit dem größeren Durchmesser in Anlage gegeneinander kommen, das Endteil (4a) elastisch verformt wird und die Reibung der Hülse (4) an der Innenwand des Zylinders (2a) des Gehäuses verstärkt wird.

2. Vorrichtung nach Anspruch 1,
**dadurch gekennzeichnet,**
**daß** die Auflagescheibe (6) mit einem Einstellorgan (5) ausgebildet ist, insbesondere einer Einstellschraube (5), die mit ihrem Gewinde in dem Zylinder (2a) des Gehäuses geführt ist.

3. Vorrichtung nach Anspruch 2,
**dadurch gekennzeichnet,**
**daß** das Einstellorgan (5) mit einer zentralen Öffnung (5b) versehen ist, welche ein Verschlußelement (7) aufnimmt, von dem ein Ende, das aus der zentralen Öffnung (5b) des Einstellorgans (5) gegenüber von dem Zapfen (3a) des Druckstücks (3) vorsteht, bevorzugt dazu geeignet ist, einen axialen Rückstoß des Druckstücks (3) zu dämpfen.
